# EUROPÄISCHE PATENTSCHRIFT

(11) **EP 0 810 020 B1**
(45) Veröffentlichungstag und Bekanntmachung des Hinweises auf die Patenterteilung: **16.06.1999**
(21) Anmeldenummer: 97108203.7
(22) Anmeldetag: 21.05.1997
(51) Int. Cl.: B01D 29/48, B01D 29/62

(54) **Spaltfilter mit gewundenem Draht**
Edge filter with wound wire
Filtre à arêtes avec fil enroulé

(30) Priorität: 30.05.1996 DE 19621657
(43) Veröffentlichungstag der Anmeldung: 03.12.1997
(73) Patentinhaber: Israel, Peter, 76437 Rastatt (DE)
(72) Erfinder: Israel, Peter, 76437 Rastatt (DE)
(74) Vertreter: Heinlein, Werner

(56) Entgegenhaltungen:
- FR-A- 1 149 082
- FR-A- 2 303 581
- GB-A- 434 576
- US-A- 3 178 023

## Beschreibung

Die Erfindung bezieht sich auf eine Filtereinrichtung nach der Gattung des Hauptanspruches. Eine derartige Filtereinrichtung ist bekannt (US 3178023 A).

Bei solchen bekannten Filtereinrichtungen ist ein Hohlzylinder verwendet, dessen Wand perforiert ist. Der Hohlzylinder dient als Tragkörper, auf den ein Filterdraht zu einer Filterspule aufwickelbar ist. Zwischen den einzelnen Windungen der Filterspule bestehen enge axiale Spalte, durch welche die zu reinigende Flüssigkeit hindurch geleitet wird. Schmutz und Feststoffpartikel, die in der Flüssigkeit eingelagert sind, werden in den engen Spalten festgehalten und damit ausgefiltert.

Zur Abreinigung der ausgefilterten Partikel wird der Filterdraht vom Tragkörper abgewickelt und über eine Reinigungsvorrichtung geführt. Der in der Reinigungsvorrichtung abgereinigte Abfall wird in einem Behälter gesammelt und entsorgt. Der gereinigte Filterdraht wird nach dem Durchlaufen der Reinigungsvorrichtung wieder auf den einzigen Tragkörper zurückgewickelt.

Eine solche bekannte Filtereinrichtung hat den Vorteil, daß der Filterkörper wieder verwendbar ist und es keinen Abfall in Form verschmutzter Kartuschen gibt.

Nachteilig ist aber, daß die Filtereinrichtung beim Abwickeln und Reinigen des Filterdrahtes außer Betrieb ist, geradeso wie vorbekannte Kartuschen-Filtereinrichtungen.Ein solcher Stillstand der Filterung kostet Zeit und Geld, insbesondere auch dann, wenn die am Filterdraht festhaftenden Schmutz- und Feststoffpartikel erst noch abtrocknen müssen, um besser abgereinigt werden zu können. Zur Behebung dieses Nachteils ist es durch die FR 2303581 A bereits bekannt, mehrere hohlzylindrische Tragkörper jeweils kombiniert mit einer Reinigungsvorrichtung und einer Umspulvorrichtung auf einer runden Tragplatte anzuordnen. Bei entsprechender Gestaltung der Zu- und Ableitung ist dann ein ununterbrochener Betrieb der Filtereinrichtung möglich.

Eine solche Bauart hat den Nachteil, daß sie sehr viel Platz benötigt und daß sie umständlich und teuer ist. Der Erfindung liegt die Aufgabe zugrunde, die aufgezeigten Nachteile zu vermeiden und eine Filtereinrichtung der eingangs genannten Art zu schaffen die sehr kompakt ist, die wenig Einzelteile aufweist, die nur eine kurze Ausfallzeit hat und die leicht zu automatisieren ist. Dabei soll sie preiswert sein und wirtschaftlich arbeiten.

Diese Aufgabe wird gemäß der Erfindung durch die kennzeichnenden Merkmale des Hauptanspruches gelöst. Eine solche Bauart hat den Vorteil, daß der von dem ersten Tragkörper abgewickelte Filterdraht auf dem zweiten Tragkörper sofort wieder eine arbeitsbereite Filterspule bildet. Es braucht nur der Flüssigkeitsdurchgang von der einen Spule auf die andere umgeleitet zu werden.

Vorteilhafte Weiterbildungen des Gegenstandes des Anspruches 1 ergeben sich aus den Merkmalen der Unteransprüche sowie aus der Beschreibung und der Zeichnung. So ist es gemäß den Merkmalen des Anspruches 2 von Vorteil, daß ein überlagern einzelner Windungen oder ein zu großer Abstand derselben vermieden wird.

Gemäß Anspruch 3 ist es vorteilhaft, daß ein und dieselbe Filterdrahtreinigung sowohl für die erste Filterspule als auch für die zweite Filterspule verwendbar ist. Die Merkmale der Ansprüche 4 und 5 bieten die Möglichkeit, die beiden Filterspulen je nach Bedarf parallel nebeneinander oder gleichachsig untereinander anzuordnen. Maßgebend für die Alternative ist der jeweils zur Verfügung stehende Einbauraum. Bei Anordnung untereinander kann gemäß Anspruch 6 für die notwendige Separierung der beiden Kammern eine einfache Trennwand dienen.

Die Ansprüche 7 bis 10 beziehen sich auf mögliche Querschnittsformen des Filterdrahtes. Solche Querschnittsformen sind an sich bereits bekannt durch die GB 434576 A. Da hier aber nur Schutz begehrt wird im Zusammenhang mit den übergeordneten Ansprüchen 1 bis 6 dürften diese Ansprüche ihre Berechtigung haben. Als Vorteil der verschiedenen Querschnittsformen ist die Anpassungsfähigkeit der entsprechend ausgebildeten Filtervorrichtung an unterschiedliche Anforderungen wie Flüssigkeitsdurchsatz, Wickelfähigkeit und Schmutzabstreifung zu nennen.

Die Merkmale der Ansprüche 11 bis 14 betreffen die Materialien,aus denen der Filterdraht besteht. Es ist sowohl ein Einzeldraht als auch ein aus mehreren Einzeldrähten geflochtener Filterdraht möglich. Daher muß der Draht nicht metallisch sein, er kann auch aus einer Schnur oder einem Seil z.B. als Glasfaser, als Kunststoff-Faser oder aus einer Natur-Faser hergestellt sein; auch ein Drahtgewebe oder ein Gewebeband ist denkbar. Vorteilhaft dabei ist, daß das je nach Anwendung günstige Material verwendet werden kann.

### Zeichnung

Mehrere Ausführungsbeispiele sind in der Zeichnung dargestellt und in der nachfolgenden Beschreibung näher erläutert. Es zeigen:
Figur 1 eine Filtervorrichtung gemäß einem ersten Ausführungsbeispiel in Seitenansicht und einem Halbschnitt längs der Linie A-B in Fig. 2,
Figur 2 eine Filtervorrichtung gemäß dem ersten Ausführungsbeispiel in Draufsicht und einem Halbschnitt längs der Linie C-D in Fig. 1,
Figur 3 einen Ausschnitt aus einem Tragkörper mit Außengewinde und Filterspule,
Figur 4 einen Ausschnitt aus einem Tragkörper ohne Außengewinde und Filterspule,
Figur 5 einen Filterdraht mit kreisförmigem Querschnitt im Schnitt,
Figur 6 einen Filterdraht, bestehend aus mehreren Einzeldrähten, im Schnitt,
Figur 7 einen Filterdraht mit rechteckigem Querschnitt im Schnitt,
Figur 8 einen Filterdraht mit dreieckigem Querschnitt im Schnitt,
Figur 9 einen Filterdraht mit profilierter Kontur in Seitenansicht,
Figur 10 ein an Stelle des Filterdrahtes benutztes Filterband in Seitenansicht,
Figur 11 eine Filtervorrichtung gemäß dem ersten Ausführungsbeispiel mit den ergänzenden Komponenten zur Abreinigung derselben in Vorderansicht,
Figur 12 eine Filtervorrichtung gemäß dem ersten Ausführungsbeispiel mit den ergänzenden Komponenten zur Abreinigung derselben in Draufsicht,
Figur 13 eine Filtervorrichtung gemäß einem zweiten Ausführungsbeispiel in Vorderansicht,
Figur 14 eine Filtervorrichtung gemäß dem zweiten Ausführungsbeispiel in Draufsicht und im Schnitt längs der Linie G-H in Fig. 13 und
Figur 15 eine Filtervorrichtung gemaß einem dritten Ausführungsbeispiel in Vorderansicht.

### Beschreibung der Ausführungsbeispiele

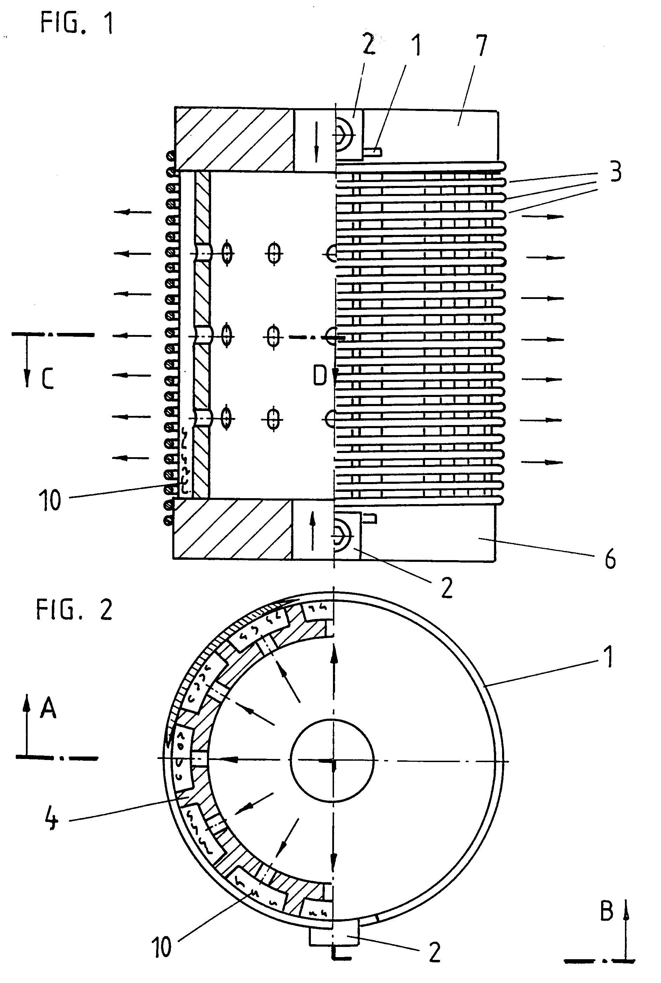

Die in den Figuren 1 und 2 skizzierte Filtereinrichtung zur Filtration von niedrig-, hoch- bis höchstviskosen Medien stellt eine Version in vereinfachter Form dar.

Sie weist einen hohlen, zylindrischen und außen axial profilierten Tragkörper 4 auf. Radial gerichtete Öffnungen im Tragkörper 4 ermöglichen den freien radialen Durchfluß des zu filternden Mediums von innen nach außen. Die Oberfläche des Tragkörpers 4 ist wahlweise eben oder auf seinem Umfang mit einem Außengewinde zur sicheren Aufnahme der ersten Filterspulenlage versehen. Radial um den Tragkörper 4 ist die aus dem Filterdraht 1 bestehende ein- oder mehrlagige Filterspule 3 mit angemessener Vorspannung gewickelt. Durch die Spulensteigung, die Anzahl der Lagen und die Abmessung des Filterdrahtes 1 wird die Spaltweite und damit die Filterfeinheit bestimmt. Bei Tragkörpern 4 ohne Außengewinde sorgt die durch die Vorspannung des Filterdrahtes 1 entstehende Reibung zwischen dem Tragkörper 4 und dem Filterdraht 1 bzw. bei mehrlagigen Wicklungen die Reibung zwischen den aufeinanderliegenden Lagen für einen festen Halt der Filterspule 3.

Bei Tragkörpern 4 mit einem Außengewinde auf dem Umfang wird die erste Lage der Filterspule 3 mit angemessener Vorspannung direkt und unverrückbar in die Gewindegänge gewickelt. Durch die Gewindesteigung und die Abmessung des Filterdrahtes 1 wird die Spaltweite und damit die Filterfeinheit bestimmt.

Die beiden freien Enden des Filterdrahtes 1 der Filterspule 3 sind durch die Filterdrahtbefestigung 2 mit dem Tragkörper 4 verbunden. Mindestens eine dieser Filterdrahtbefestigungen 2 ist zwecks Lösen des Filterdrahtes 1 für die Abreinigung wiederholt und zerstörungsfrei zu lösen.

Die beiden offenen Stirnseiten des Tragkörpers 4 sind durch den Tragkörperboden 6 und den Tragkörperdeckel 7 verschlossen. Axiale Öffnungen im Tragkörperboden 6 und/oder im Tragkörperdeckel 7 sorgen für freien axialen Durchfluß des zu filternden Mediums von außen in den hohlen Tragkörper 4. Der Filter ist in Filtergehäuse herkömmlicher bekannter Bauart integriert. Diese Filtergehäuse sind Stand der Technik, nicht Bestandteil dieser Erfindung und daher nicht dargestellt.

Bei der entsprechend der Pfeilrichtung dargestellten Durchströmung der Filterspule 3 von innen nach außen durchströmt das zu filternde Medium auf Grund einer Druckdifferenz zwischen dem Filtereinlaß und dem Filterauslaß nacheinander die axiale Öffnung des Tragkörperbodens 6 und/oder die axiale Öffnung des Tragkörperdeckels 7, die radialen Öffnungen des hohlen Tragkörpers 4 und die Filterspule 3. Dabei lagern sich die Feststoffpartikel, deren Korngröße über der Spaltweite der Filterspule 3 liegen, auf Grund ihrer Größe innen auf der Oberfläche der Filterspule 3 an. Beim von außen nach innen durchströmten Filter erfolgt die Durchströmung des Filters sinngemäß in entgegengesetzter Richtung und die Anlagerung der Feststoffpartikel erfolgt auf der Außenseite der Filterspule.

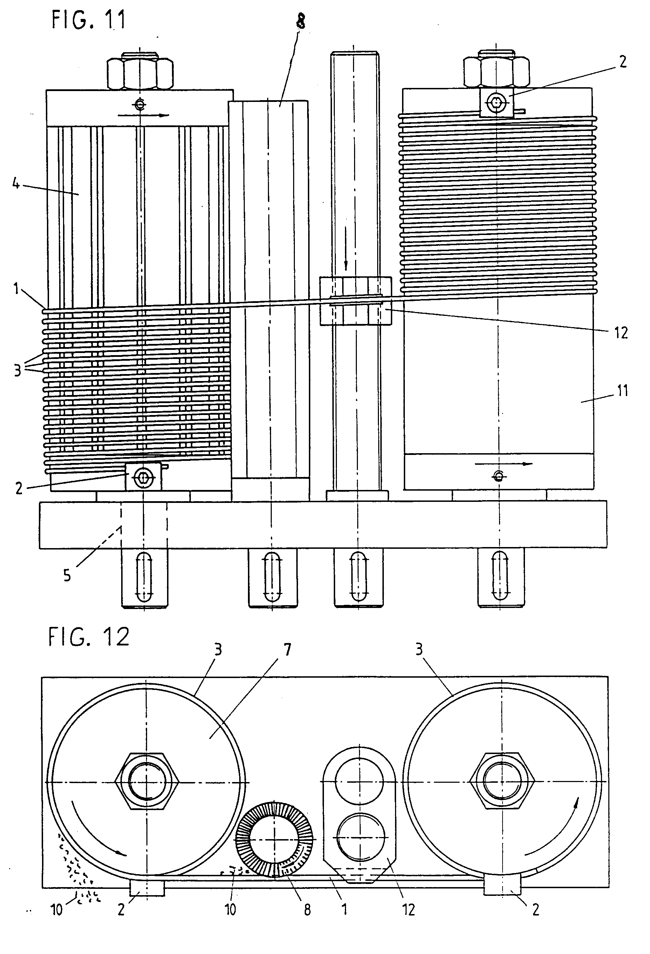

Das Abreinigen der Feststoffpartikel erfolgt außerhalb des Filtergehäuses, wobei es zur halb- bzw. vollautomatisierten Abreinigung der Feststoffpartikel weiterer, in den Figuren 11 und 12 dargestellter Komponenten, wie z.B. einer Filterdrahtreinigung bedarf.

Zur Abreinigung der Filterspule 3 wird der Filterdraht 1 an einem Ende aus der Filterdrahtbefestigung 2 gelöst und vom rotierenden Tragkörper 4 abgewickelt. Während dieses Vorganges erfolgt das Absondern der ausgefilterten Feststoffpartikel 10 von der Filterspule 3 durch Herabfallen in Folge der auf die Feststoffpartikel wirkenden Gravitationskräfte und/oder Herausschleudern in Folge der auf die Feststoffpartikel 10 wirkenden und durch die Rotation verursachten Zentrifugalkräfte und/oder durch die vom Filterdraht 1 durchlaufene Filterdrahtreinigung.

Nach dem vollständigen Abreinigen der Feststoffpartikel 10 wird der abgewickelte Filterdraht 1 wieder unter Einhaltung der Filterspulensteigung und unter angemessener Vorspannung von einem Tragkörper 11 auf den Tragkörper 4 gewickelt und mit der Filterdrahtbefestigung 2 an diesem befestigt.

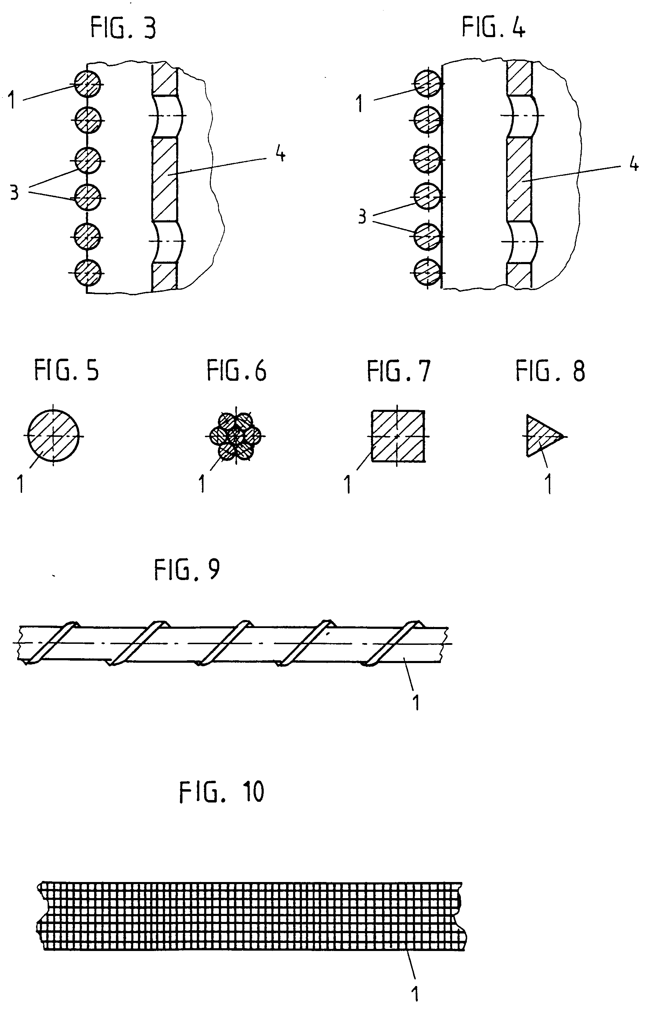

Bei dem in der Figur 3 dargestellten Ausschnitt aus dem in Figur 1 dargestellten Tragkörper 4 ist dieser auf seinem Umfang mit einem Außengewinde versehen. Bei gleicher Steigung von Außengewinde und Filterspule 3 wird der Filterdraht 1 während des Wickelns der Filterspule 3 direkt und unverrückbar in die Gewindegänge gewickelt.

Bei dem in der Figur 4 dargestellten Ausschnitt aus dem in Figur 1 dargestellten Tragkörper 4 ist dieser auf seinem Umfang eben und nicht mit einem Außengewinde versehen.

In diesem Fall sorgt die durch die Vorspannung des Filterdrahtes 1 entstehende Reibung zwischen dem Tragkörper 4 und dem Filterdraht 1 bzw. bei mehrlagigen Wicklungen die Reibung zwischen den aufeinanderliegenden Lagen für einen festen Halt der Filterspule 3.

In der Figur 5 ist ein vorzugsweise verwendeter Filterdraht 1 mit kreisförmigem Querschnitt dargestellt. Dieser Filterdraht 1 eignet sich zum Wickeln von Filterspulen und zeichnet sich durch preislichen Vorteil aus.

In der Figur 6 ist ein aus mehreren Einzeldrähten bestehender Filterdraht 1 dargestellt. Dieser Filterdraht 1 eignet sich ebenfalls zum Wickeln von Filterspulen.

In der Figur 7 ist ein Filterdraht 1 mit rechteckigem Querschnitt dargestellt. Dieser Filterdraht 1 eignet sich ebenfalls zum Wickeln von Filterspulen.

In der Figur 8 ist ein Filterdraht 1 mit dreieckigem Querschnitt dargestellt. Dieser Filterdraht 1 eignet sich ebenfalls zum Wickeln von Filterspulen und bietet den Vorteil einer verkürzten Filterspalttiefe und einen dadurch erzielten geringeren Druckverlust zwischen Filtereinlaß und Filterauslaß.

In der Figur 9 ist ein Filterdraht 1 mit schraubenförmig profilierter Kontur dargestellt. Dieser Filterdraht 1 eignet sich ebenfalls zum Wickeln von Filterspulen. Insbesondere bei Filterspulen mit sehr geringer Spaltweite und bei mehrlagigen Filterspulen ist damit eine Verbesserung des Filtrationsverhaltens zu erzielen.

In Figur 10 ist ein an Stelle des Filterdrahtes benutztes Filterband 1 dargestellt. Dieses eignet sich ebenfalls zum Wickeln von Filterspulen. Das Filterband besteht aus z. B. Glasfaser, Kunststofffaser, Naturfaser, Drahtgewebe oder einer Materialkombination. Das Filterband eignet sich insbesondere zum Wickeln von Filterspulen, deren Steigung maximal der Breite des Filterbandes entspricht. Wegen der dadurch entstehenden überdeckung der Filterspulengänge erfolgt das Absondern der Feststoffpartikel direkt durch das Filterband.

In den Figuren 11 und 12 ist eine Vorrichtung zur halb- bzw. vollautomatisierten Abreinigung des in Fig. 1 und 2 dargestellten Filters dargestellt.

Der abzureinigende Tragkörper 4 mit der abzureinigenden Filterspule 3 ist durch ein Tragkörperlager 5 gelagert. Parallel zum Tragkörper 4 ist ein zweiter ebenfalls gelagerte, Tragkörper 11 angeordnet. Zwischen beiden befinden sich eine als Filterdrahtreinigung 8 dienende Bürste und die Filterdrahtführung 12. Der Filterdraht 1 wird durch öffnen der Filterdrahtbefestigung 2 gelöst, durch Filterdrahtreinigung 8 und Filterdrahtführung 12 geführt und mit dem Tragkörper 11 verbunden. Während der anschließenden Abreinigung der Feststoffpartikel 10 sorgt ein motorischer oder manueller Antrieb für eine Rotation des Tragkörpers 4, des Tragkörpers 11 und der Filterdrahtreinigung 8. Ein Getriebe verbindet den Tragkörper 4, den Tragkörper 11, die Filterdrahtreinigung 8 und die Filterdrahtführung 12 miteinander und sorgt für gleiche Umfangsgeschwindigkeiten der beiden Tragkörper 4 und 11. Dabei wird die Filterspule 3 vom einem Tragkörper 4 abgewickelt und auf den anderen Tragkörper 11 aufgewickelt. Während dieses Vorganges erfolgt das Absondern der ausgefilterten Feststoffpartikel 10 von der Filterspule 3 durch Herabfallen in Folge der auf die Feststoffpartikel wirkenden Gravitationskräfte und/oder Herausschleudern in Folge der auf die Feststoffpartikel wirkenden und durch die Rotation verursachten Zentrifugalkräfte und/oder durch die vom Filterdraht 1 durchlaufene Filterdrahtreinigung 8. Die Feststoffpartikel 10 sammeln sich im darunter befindlichen Feststoffspeicher.

Nach der Abreinigung wird der Filterdraht 1 wieder vom Tragkörper 11 auf den Tragkörper 4 zurückgespult, vom Tragkörper 11 gelöst und mit Hilfe der Filterdrahtbefestigung 2 wieder am Tragkörper 4 befestigt. Während des Spulens führt die Filterdrahtführung 12 den Filterdraht 1 und sorgt für die Einhaltung der gewünschten Filterspulensteigung.

Die Reinigung des Filterdrahtes durch z. B. Abstreifer, Bürsten, Flüssigkeitsstrahl, Luftstrahl und Aufschwingen desselben auf eine hohe Frequenz ist Stand der Technik und ist daher nicht in einzelnen dargestellt. Gleiches gilt für Tragkörperlager 5, Filterdrahtreinigung 8, Filterdrahtführung 12, Filterdrahtbefestigung 2 und das aus Zahnriemen 13 und Zahnriemenrädern 14 bestehende Getriebe. Nicht dargestellt sind der Antrieb und der Feststoffspeicher, welche ebenso Stand der Technik sind.

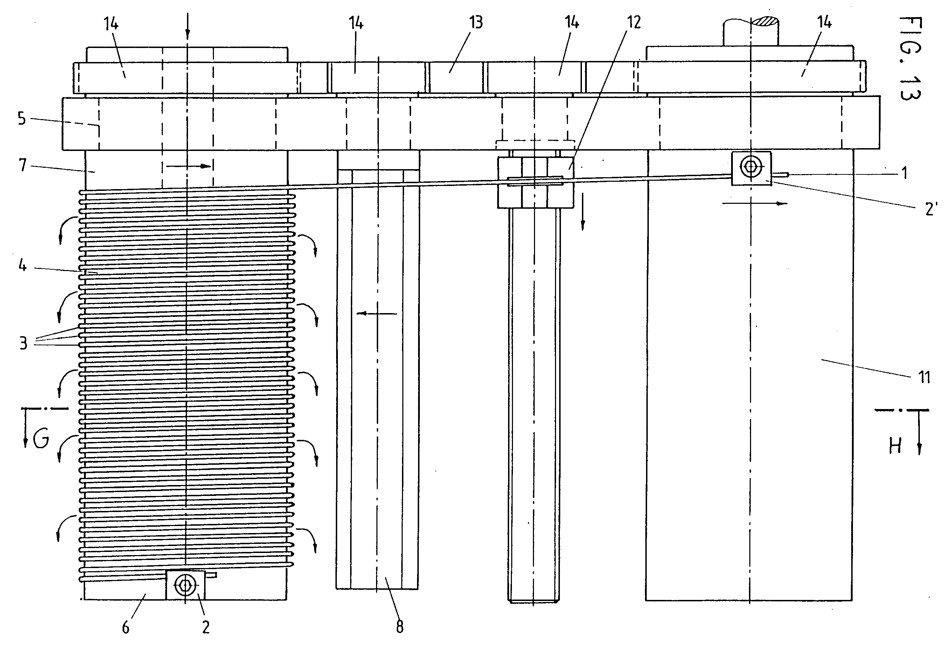

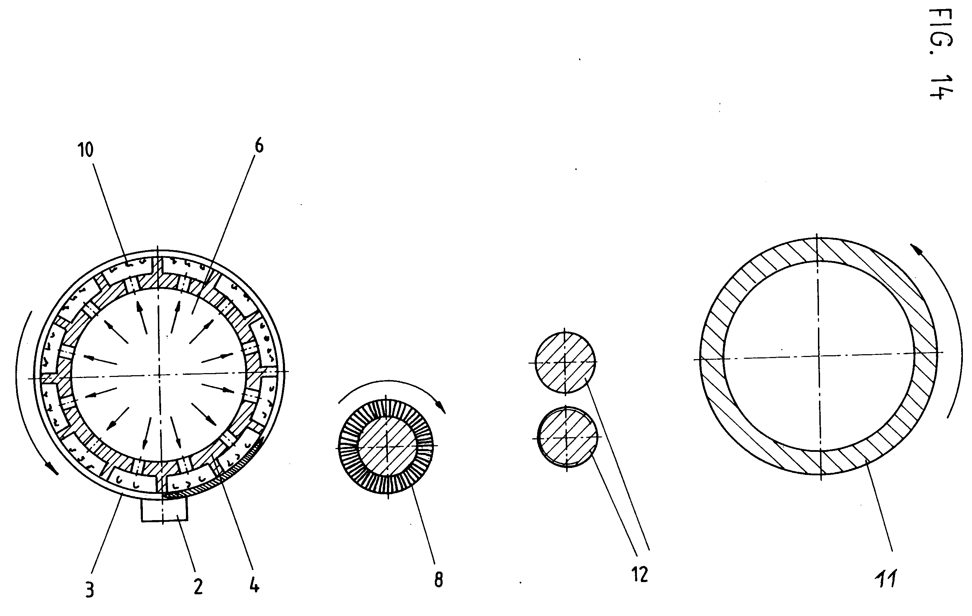

In dem in den Figuren 13 und 14 dargestellten bevorzugten zweiten Ausführungsbeispiel der Erfindung ist die aus dem Filterdraht 1 bestehende Filterspule 3 um einen vorzugsweise vertikalen, zylindrischen, hohlen, außen axial profilierten und mit einer eine Rotation ermöglichenden Lagerung versehenen Tragkörper 4 gewickelt. Ein Filterdrahtende der Filterspule 3 ist dauerhaft mit dem Tragkörper 4 verbunden. Das andere freie Filterdrahtende der Filterspule 3 ist dauerhaft mit dem parallel zum Tragkörper 4 angeordneten zweiten Tragkörper 11 verbunden. Dieser Tragkörper 11 ist ebenso wie der Tragkörper 4 mit einem Außengewinde zur Aufnahme der Filterspule 3 und einer eine Rotation ermöglichenden Lagerung versehen. Ein Zahnriemengetriebe, bestehend aus Zahnriemenrädern 14 und einem Zahnriemen 13, Verbindet die Tragkörper 4, 11, die Filterdrahtreinigung 8 und die Filterdrahtführung 12 und sorgt für gleiche Umfangsgeschwindigkeiten der beiden Tragkörper 4 und 11 während des für die Abreinigung erforderlichen Umwickelns der Filterspule 3 vom ersten Tragkörper 4 auf den anderen Tragkörper 11. Hierbei führt die vom Zahnriemen 13 angetriebene Filterdrahtführung 12 den Filterdraht 1 entsprechend der gewünschten Filterspulensteigung.

Während des Filterbetriebes tritt das zu filternde Medium entsprechend der dargestellten Pfeilrichtung von oben axial durch eine Öffnung im Tragkörperdeckel 7 in den hohlen und nach unten durch den Tragkörperboden 6 verschlossenen Tragkörper ein. Auf Grund seiner Schwerkraft durchfließt das zu filternde Medium entsprechend der dargestellten Pfeilrichtung nacheinander die radialen Öffnungen im Tragkörper 4 und die Filterspule 3. Während des Durchströmens der Filterspule 3 lagern sich die abzureinigenden Feststoffpartikel, deren Korngröße über der Spaltweite der Filterspule 3 liegt, auf Grund ihrer Größe auf der Innenseite derselbigen an.Nach dem Durchfließen dieser Filterspule 3 fließt das gereinigte Medium in den darunter befindlichen Filterauslauf oder den Reinbehälter.

Während der Abreinigung der Feststoffpartikel 10 wird der Zufluß des zu reinigenden Mediums unterbrochen und ein Feststoffspeicher unter dem Filter positioniert. Die abzureinigende Filterspule 3 wird dabei von dem Tragkörper 4 auf den anderen Tragkörper 11 gewickelt. Die Einleitung der Rotationsbewegung erfolgt manuell oder motorisch. Während dieses Vorganges erfolgt das Abreinigen der ausgefilterten Feststoffpartikel 10 durch Herabfallen in Folge der auf die Feststoffpartikel 10 wirkenden Gravitationskräfte und/oder Herausschleudern in Folge der auf die Feststoffpartikel 10 wirkenden und durch die Rotation verursachten Zentrifugalkräfte und/oder durch die, vom Filterdraht 1 durchlaufenen und vom Zahnriemen in Rotation versetzte, als Filterdrahtreinigung dienende Bürste. Während der Abreinigung sorgt die Filterdrahtführung 12 für die Einhaltung der gewünschten Filterspulensteigung. Die abgereinigten Feststoffpartikel 10 sammeln sich im darunter positionierten Feststoffbehälter.

Die Reinigung des Filterdrahtes durch z.B. Abstreifer, Bürsten, Flüssigkeitsstrahl, Luftstrahl und Aufschwingen desselben auf eine hohe Frequenz ist Stand der Technik und ist daher nicht in einzelnen dargestellt. Gleiches gilt für die die Rotation ermöglichende Lagerung der Tragkörper 4 und 11, den nicht dargestellten Feststoffspeicher sowie das Getriebe und den nicht dargestellten manuellen oder motorischen Antrieb.

Wahlweise können die beiden Tragkörper 4 und 11 mit einem der Filterspulensteigung entsprechenden Außengewinde versehen werden.Da in diesem Fall die Außengewinde zur Aufnahme

und zur Führung des Filterdrahtes 1 bzw. der Filterspule 3 dienen, kann auf die separate Filterdrahtführung 12 verzichtet werden.

Nach dem Abreinigen der Feststoffpartikel 10 wird der abgewickelte Filterdraht 1 wieder unter Einhaltung der Filterspulensteigung und unter angemessener Vorspannung von dem einen Tragkörper 4 auf den anderen Tragkörper 11 gewickelt.

Durch die Verwendung zweier Tragkörper verkürzt sich die Unterbrechung des Filterbetriebes vorteilhaft um die Zeit, welche zum Zurückspulen der abgereinigten Filterspule erforderlich ist.

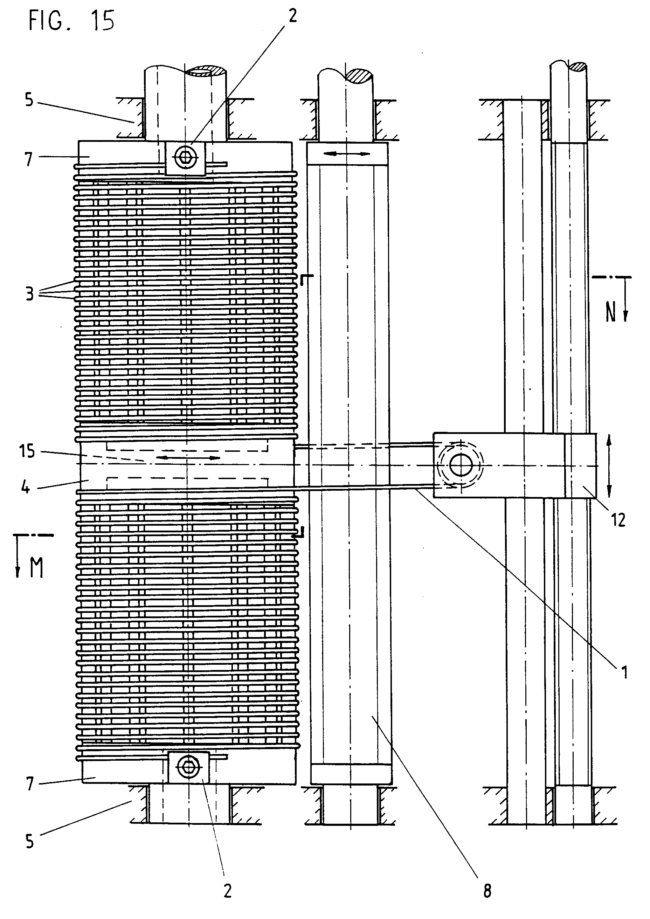

In der Figur 15 ist ein drittes Ausführungsbeispiel der Erfindung dargestellt. Der vorzugsweise horizontale, gelagerte, zylindrische, außen axial profilierte und hohle Tragkörper 4 hat zwei Kammern, eine linke und eine rechte. Beide Kammern sind durch eine breite Trennwand 15 voneinander getrennt und stirnseitig jeweils durch einen Tragkörperdeckel 7 verschlossen. Jede der Kammern ist mit einer Filterspule 3 umwickelt. Beide Filterspulen 3 haben einen gemeinsamen Filterdraht 1. Die freien Filterdrahtenden sind dauerhaft mit dem Tragkörper 4 verbunden. Im Bereich der Trennwand 15 wird der Filterdraht 1 von der linken Filterspule 3 tangential abgeleitet und, ebenso wie im zweiten Ausführungsbeispiel, über eine als Umlenkeinrichtung dienende Filterdrahtführung 12 der rechten Filterspule tangential wieder zugeführt. Zwischen den auf dem Tragkörper 4 aufgewickelten Filterspulen 3 und der Filterdrahtführung 12 befindet sich eine als Filterdrahtreinigung 8 dienende Bürste.

Wechselweise dient eine der Kammern jeweils zur Filtration des zu filternden Mediums (im folgenden Filterkammer genannt) und die andere der Kammern jeweils zum Abreinigen der ausgefilterten Feststoffpartikel 10 (im folgenden Abreinigungskammer genannt).

Das zu filternde Medium durchfließt auf Grund einer Druckdifferenz zwischen Filtereinlaß und Filterauslaß nacheinander axial eine Öffnung des Tragkörperdeckels 7 der Filterkammer, radiale Öffnungen im Tragkörper 4 und die Filterspule 3. Die abzureinigenden Feststoffpartikel 10, deren Korngröße über der Spaltweite der Filterspule 3 liegt, lagern sich dabei auf Grund ihrer Größe auf der Innenseite der vom zu filternden Medium durchflossenen Filterspule 3 an. Anschließend fließt das gereinigte Medium in den darunter befindlichen Filterauslaß oder Reinbehälter. Gleichzeitig wird die Abreinigungskammer abgereinigt. Dabei wird der verschmutzte Filterdraht 1 dieser Filterspule 3 durch die entsprechend der Filterspulensteigung folgende Filterdrahtführung 12 von dem rotierenden Tragkörper 4 tangential abgeleitet und nach der Umlenkung in der Filterdrahtführung 12 diesem wieder tangential zugeführt. Dabei durchläuft der Filterdraht 1 die Filterdrahtreinigung 8, welche die anhaftenden Feststoffpartikel 10 abscheidet. Während dieses Vorganges erfolgt das Absondern der am Tragkörper 4 anhaftenden ausgefilterten Feststoffpartikel 10 durch Herabfallen in Folge der auf die Feststoffpartikel 10 wirkenden Gravitationskräfte und/oder Herausschleudern in Folge der auf die Feststoffpartikel 10 wirkenden und durch die Rotation verursachten Zentrifugalkräfte. Die Feststoffpartikel 10 sammeln sich im darunter befindlichen Feststoffspeicher.

Die Reinigung des Filterdrahtes 1 durch z. B. Abstreifer, Bürsten, Flüssigkeitsstrahl, Luftstrahl und Aufschwingen desselben auf eine hohe Frequenz ist Stand der Technik und ist daher nicht näher dargestellt. Gleiches gilt für die die Rotation ermöglichende Tragkörperlagerung 5, die als Umlenkung dienende Filterdrahtführung 12, das Getriebe und den nicht dargestellten Antrieb.

Nach dem Abreinigen der Abreinigungskammer ändert der Tragkörper 4 seine Drehrichtung bis sich die Filterdrahtführung 12 wieder im Bereich der Trennwand 15 befindet.

Nachdem die Filterkammer durch angelagerte Feststoffpartikeln 10 verschmutzt ist, wird das zu reinigende Medium nunmehr der zweiten abgereinigten Kammer zugeführt. Diese Abreinigungkammer wird damit zur Filterkammer und die ehemalige Filterkammer zur Abreinigungskammer. Gleichzeitig ist der Feststoffbehälter unter der ehemaligen Abreinigungskammer zu entfernen und unter der neuen Abreinigungskammer zu positionieren.

Vorteil dieser konstruktiven Gestaltung ist der völlig unterbrechungsfreie Filterbetrieb und die mögliche Automatisierung.

### Bezugszeichenliste

- 1 -: Filterdraht
- 2 -: Filterdrahtbefestigung
- 3 -: Filterspule
- 4 -: Tragkörper
- 5 -: Tragkörperlager
- 6 -: Tragkörperboden
- 7 -: Tagkörperdeckel
- 8 -: Filterdrahtreinigung
- 9 -: -----
- 10 -: Feststoffpartikel
- 11 -: Tragkörper
- 12 -: Filterdrahtführung
- 13 -: Zahnriemen
- 14 -: Zahnriemenräder
- 15 -: Trennwand

## Patentansprüche

1. Filtereinrichtung zur filterhilfsmittelfreien Filtration von zu filternden Medien, wobei als Filter ein zumindest drahtartiger Filterdraht (1) verwendet ist, der um einen mindestens weitgehend zylindrischen ersten Tragkörper (4) zu einer Filterspule (3) wickelbar ist, die von der zu reinigenden Flüssigkeit in axialer und durch axiale Spalte der gewickelten Filterspule (3) hindurch in radialer Richtung durchströmbar ist, **dadurch gekennzeichnet, daß** der Filterdraht (1) zu einer Abreinigung der an ihm anhaftenden Feststoffpartikel (10) von dem ersten Tragkörper (4) der ersten Filterspule (3) auf einen zweiten Tragkörper (11) einer zweiten Filterspule aufwickelbar ist.

2. Filtereinrichtung nach Anspruch 1 mit zur Führung des Filterdrahtes (1) dienenden Gewindegängen auf dem Tragkörper (4), **dadurch gekennzeichnet, daß** zusätzlich zu einer Festlegung der Seitenabstände des Filterdrahtes (1) durch die einzelnen Gewindegänge eine Vorausrichtung jeder neuen Windung durch die jeweils vorangegangene Windung erzielbar ist.

3. Filtereinrichtung nach Anspruch 1 oder 2, **dadurch gekennzeichnet, daß** eine Filterdrahtreinigung (8) verwendet ist, die von dem Filterdraht (1) während des Auf- und Abwickelns der beiden Filterspulen (3,3) zwecks Abreinigung durchlaufen wird.

4. Filtereinrichtung nach einem der Ansprüche 1-3, **dadurch gekennzeichnet, daß** die Tragkörper (4,11) parallelachsig nebeneinander angeordnet sind.

5. Filtereinrichtung nach einem der Ansprüche 1-3, **dadurch gekennzeichnet, daß** jeweils zwei Tragkörper (4,11) gleichachsig untereinander angeordnet sind.

6. Filtereinrichtung nach Anspruch 5, **dadurch gekennzeichnet, daß** die beiden Tragkörper (4,11) durch eine Trennwand (15) voneinander separierte Kammern aufweisen, die wechselweise für den Filterbetrieb ein- und ausschaltbar sind.

7. Filtereinrichtung nach einem der Ansprüche 1-6, **dadurch gekennzeichnet, daß** der Filterdraht (1) einen kreisförmigen Querschnitt hat.

8. Filtereinrichtung nach einem der Ansprüche 1-6, **dadurch gekennzeichnet, daß** der Filterdraht (1) einen rechteckigen Querschnitt hat.

9. Filtereinrichtung nach einem der Ansprüche 1-6, **dadurch gekennzeichnet, daß** der Filterdraht (1) einen dreieckigen Querschnitt hat.

10. Filtereinrichtung nach einem der Ansprüche 1-6, **dadurch gekennzeichnet, daß** der Filterdraht (1) eine profilierte Kontur hat.

11. Filtereinrichtung nach einem der Ansprüche 1-6, **dadurch gekennzeichnet, daß** der Filterdraht (1) aus mehreren Einzeldrähten besteht.

12. Filtereinrichtung nach einem der Ansprüche 1-6, **dadurch gekennzeichnet, daß** der Filterdraht (1) eine Schnur oder ein Seil ist.

13. Filtereinrichtung nach einem der Ansprüche 1-6, **dadurch gekennzeichnet, daß** der Filterdraht (1) eine Glas-Faser, eine Kunststoff-Faser oder eine Natur-Faser ist.

14. Filtereinrichtung nach einem der Ansprüche 1-6, **dadurch gekennzeichnet, daß** der Filterdraht (1) ein Drahtgewebe oder ein Gewebeband ist.

## Claims

1. Filtering facility for the filter-aid-free filtration of media to be filtered, the filter of which should at least be a wire-like filter wire (1) coiling around an at least largely cylindical first carrying body (4) to a filter coil (3) which allows the liquid to be cleaned to flow through in an axial direction, and through the axial opening of the wound-up filter coil (3) in a radial direction, characterised by the fact that the filter wire (1) can be coiled from the first carrying body (4) of the first filter coil (3) onto a second carrying body (11) of a second filter coil for the pupose of cleaning it from any adhering solid particles.

2. Filtering facility in accordance with claim l, with threads on the carrying body (4) for the purpose of guiding the filter wire (1), characterised by the fact that, in addition to a determination of the leteral distances of the filter wire (1) through the individual threads, a prealignment of each new turn is achievealbe by means of the previous turn.

3. Filtering facility in accordance with claim 1 or 2, characterised by the fact that both filter coils (3, 3) run throug a filter wire cleaning (8) during coiling and uncoiling for the purpose of dedusting.

4. Filtering facility in accordance with any of the claims 1 - 3, characterised by the fact that the carrying bodies (4, 4) are aligned with parallel axes.

5. Filtering facility in accordance with any of the claims 1 - 3, characterised by the fact that two carrying bodies (4, 4) each are aligned coaxially to each other.

6. Filtering facility in accordance with claim 5, characterised by the fact that both carrying bodies (4, 4) have chambers separated from each other by a dividing wall (15), which can be switched on and off in turn for the filter operation.

7. Filtering facility in accordance with any of the claims 1 - 6, characterised by the fact that the filter wire (1) has a circular cross section.

8. Filtering facility in accordance with any of the claims 1 - 6, chaqracterised by the fact that the filter wire (1) has a rectangular cross-section.

9. Filtering facility in accordance with any of the claims 1 - 6, characterised by the fact that the filter wire (1) has a triangular cross-secton.

10. Filtering facility in accordance with any of the claims 1 - 6, characterised by the fact that the filter wire (1) has a shaped profile.

11. Filtering facility in accordance with any of the claims 1 - 6, characterised by the fact that the filter wire (1) consists of several individual wires.

12. Filtering facility in accordance with any of the claims 1 - 6, characterised by the fact that the filter wire (1) is a cord or a rope.

13. Filtering facility in accordance with any of the claims 1 - 6, characterised by the fact that the filter wire (1) is a glass fibre, a synthetic fibre or a natural fibre.

14. Filtering facility in accordance with any of the claims 1 - 6, characterised by the fact that the filter wire (1) is a wire cloth or a fabric tape.

## Revendications

1. Dispositif de filtrage pour la filtration sans auxiliaire de filtrage, de fluides, avec comme filtre un fil (1) qui peut être enroulé autour d'un premier corps de support (4) amplement cylindrique, en formant une bobine de filtrage (3), dans laquelle le liquide à nettoyer s'écoule axialement, radialement et par la fente axiale de la bobine de filtrage enroulée (3), dispositif caractérisé par le fait que le fil de filtrage (1) peut être enroulé du premier corps de support (4) de la première bobine de filtrage (3) sur un deuxième corps de filtrage (11) d'une deuxième bobine de filtrage pour nettoyer les particules solides (10) qui lui adhèrent.

2. Dispositif de filtrage suivant l'exigence 1 avec sur le cops de support (4) des filetages servant au guidage du fil de filtrage (1), caractérisé par le fait qu'en plus de la détermination des écarts latéraux du fil de filtrage (1) par les différents filetages, une préorientaition de chaque nouvelle spire peut être obtenue par la spire précédente.

3. Dispositif de filtrage suivant l'exigence 1 ou 2, caractérisé par le fait qu'il est utilisé un nettoyage à fil de filtrage (8) qui est parcouru par le fil de filtrage (1) pendant l'enroulement et le déroulement des deux bobines de filtrage (3, 3) pour le nettoyage.

4. Dispositif de filtrage suivant l'exigence 1 - 3, caractérisé par le fait que les corps de support (4, 4) sont disposés l'un à côté de l'autre avec des axes parallèles.

5. Dispositif de filtrage suivant l'exigence 1 - 3, caractérisé par le fait que deux corps de support (4, 4) sont disposés respectivement sur le même axe.

6. Dispositif de filtrage suivant l'exigence 5, caractérisé par le fait que les deux corps de support (4, 4) présentent des chambres séparées l'une de l'autre par une cloison (15), qui peuvent être tour à tour activées et désactivées pour le filtrage.

7. Dispositiv de filtrage suivant l'une des exigences 1 - 6, caractérisé par le fait que le fil de filtrage (1) a une section circulaire.

8. Dispositif de filtrage suivant l'une des exigences 1 - 6, caractéerisé par le fait que le fil de filtrage (1) a une section rectangulaire.

9. Dispositif de filtrage suivant l'une des exigences 1 - 6, caractérisé par le fait que le fil de filtrage (1) a une sectin triangulaire.

10. Dispositif de filtrage suivant l'une des exigences 1 - 6, caractérisé par le fait que le fil de filtrage (1) a un contour profilé.

11. Dispositiv de filtrage suivant l'une des exigences 1 - 6, caractérisé par le fait que le fil de filtrage (1) est composé de plusieurs fils individuels.

12. Dispositif de filtrage suivant l'une des exigences 1 - 6, caractérisé par le fait que le fil de filtrage (1) est un cordon ou un câble.

13. Dispositif de filtrage suivant l'une des exigences 1 - 6, caractérisé par le fait que le fil de filtrage (1) est une fibre de verre, une fibre de plastique ou une fibre naturelle.

14. Dispositiv de filtrage suivant l'une des exigences 1 - 6, caractérisé par le fait que le fil de filtrage (1) est un tissu métallique ou une bande de tissu.
